# EUROPEAN PATENT APPLICATION

(11) **EP 4 481 841 A1**
(43) Date of publication of application: **25.12.2024**
(21) Application number: 23756586.6
(22) Date of filing: 14.02.2023
(51) Int. Cl.: H01M 4/04, B65H 35/04

(54) **SECONDARY BATTERY MANUFACTURING DEVICE AND SECONDARY BATTERY MANUFACTURING METHOD USING SAME**

(30) Priority: 16.02.2022 KR 20220020454
(71) Applicant: LG Energy Solution, Ltd., Seoul 07335 (KR)
(72) Inventor: KIM, Suk, Daejeon 34122 (KR); HEO, Jun Gyu, Daejeon 34122 (KR)
(74) Representative: Goddar, Heinz J.
(86) International application number: PCT/KR2023/002086
(87) International publication number: WO 2023/158173

(57) **Abstract**

The present invention relates to an apparatus for manufacturing a secondary battery and a method for manufacturing a secondary battery using the same, and more particularly, to an apparatus for manufacturing a secondary battery, which slits an electrode, and a method for manufacturing the secondary battery using the same.

The present invention provides an apparatus for manufacturing a secondary battery, which includes: at least one unwinding part configured to unwind an electrode sheet on which an electrode active material is applied and dried; at least one first slitting part configured to receive the electrode sheet from the unwinding part and primarily cut the electrode sheet so as to provide a plurality of first unit electrode sheets; at least one second slitting part configured to receive the first unit electrode sheets from the first slitting part and secondarily cut the first unit electrode sheets so as to provide a plurality of second unit electrode sheets; at least one rewinding part configured to receive the second unit electrode sheets from the second slitting part so as to wind the received second unit electrode sheets; and a frame part having a slitting space therein, wherein the first slitting part and the second slitting part are installed on the frame part.

## Description

### TECHNICAL FIELD

### CROSS-REFERENCE TO RELATED APPLICATION

The present application claims the benefit of the priority of Korean Patent Application No. 10-2022-0020454, filed on February 16, 2022, which is hereby incorporated by reference in its entirety.

### TECHNICAL FIELD

The present invention relates to an apparatus for manufacturing a secondary battery and a method for manufacturing a secondary battery using the same, and more particularly, to an apparatus for manufacturing a secondary battery, which slits an electrode, and a method for manufacturing the secondary battery using the same.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

Such a secondary battery comprises an electrode assembly in which electrodes and separators are alternately stacked and a case accommodating the electrode assembly, and the electrode assembly has a structure in which the plurality of electrodes and the plurality of separators are alternately stacked.

Also, a method for manufacturing the secondary battery comprises an electrode manufacturing process of manufacturing electrodes, an electrode assembly assembling process of stacking the manufactured electrodes and a separator to assemble an electrode assembly, and a process of accommodating the manufactured electrode assembly in a case to manufacture the secondary battery.

Here, the electrode manufacturing process generally includes a coating process of applying and drying an electrode active material on an electrode sheet, a press process of pressing the electrodes after the coating process, and a slitting process of cutting each of the electrodes into a preset width after the press process.

Here, in the slitting process, a first slitter and a second slitter sequentially cut the electrode. In the related art, there is a problem in that facilities such as a rewinder and an unwinder in the first slitter and the second slitter are duplicated to increase in work time, and thus, electrode yield is deteriorated.

As a result, it is necessary to develop a technology to solve the above problem.

### DISCLOSURE OF THE INVENTION

### TECHNICAL PROBLEM

The present invention has been made to solve the above problem, and an object of the present invention is to provide an apparatus for manufacturing a secondary battery, in which a first slitter and a second slitter are introduced into a device for slitting an electrode to perform both electrode primary slitting and secondary slitting in one facility to significantly improve electrode productivity, and a method for manufacturing a secondary battery using the same.

### TECHNICAL SOLUTION

The present invention provides an apparatus for manufacturing a secondary battery, which includes: at least one unwinding part configured to unwind an electrode sheet on which an electrode active material is applied and dried; at least one first slitting part configured to receive the electrode sheet from the unwinding part and primarily cut the electrode sheet so as to form a plurality of first unit electrode sheets; at least one second slitting part configured to receive the first unit electrode sheets from the first slitting part and secondarily cut the first unit electrode sheets so as to form a plurality of second unit electrode sheets; at least one rewinding part configured to receive the second unit electrode sheets from the second slitting part so as to wind the received second unit electrode sheets; and a frame part having a slitting space therein, wherein the first slitting part and the second slitting part are installed on the frame part.

The apparatus may further include at least one first position correction part disposed on a movement path of the electrode sheet to detect a position of the electrode sheet so as to correct the position of the electrode sheet.

The first position correction part may be mounted on the frame part.

The first position correction part may include: a first position detection part configured to detect the position of the electrode sheet; and a first position correction part configured to correct the position of the electrode sheet based on position information of the electrode sheet, which is acquired from the first position detection part.

The first position detection part may include a line position control (LPC) sensor.

The first position detection part may include a pivot roller.

In addition, the apparatus may further include at least one second position correction part provided between the first slitting part and the second slitting part to detect a position of each of the first unit electrode sheets so as to correct the position of each of the first unit electrode sheets.

The second position correction part may be provided corresponding to the number of first unit electrode sheets formed by being cut from the first slitting part.

The second position correction part may include: a second position detection part configured to detect the position of the first electrode sheet; and a second position correction part configured to correct the position of the first unit electrode sheet based on position information of the first unit electrode sheet, which is acquired from the second position detection part.

The second position detection part may include a line position control (LPC) sensor.

The second position detection part may include a pivot roller.

The frame part may include: a bottom part; a pair of pillar parts extending upward from the bottom part; a wall part coupled to a side surface of each of the pair of pillar parts; and a cover part which is coupled to a top surface of each of the pair of pillar parts and in which an input hole, through which the electrode sheet is put into the slitting space, is defined.

The plurality of first unit electrode sheets may be branched from the first slitting part toward the pair of pillar parts to move; and the rewinding part may be provided in plurality, which are fixedly installed to face each other on the pair of pillar parts.

The first slitting part and the second slitting part may be fixedly installed on the wall part.

The present invention provides a method for manufacturing a secondary battery, which includes: an unwinding process of unwinding an electrode sheet on which an electrode active material is applied and dried; a first slitting process of primarily cutting the electrode sheet to form a plurality of first unit electrode sheets after the unwinding process; a second slitting process of secondarily cutting the first unit electrode sheets to form a plurality of second unit electrode sheets after the first slitting process; and a rewinding process of winding the second unit electrode sheets after the second slitting process, wherein the unwinding process, the first slitting process, the second slitting process, and the rewinding process are continuously performed.

In addition, the method may further include a first position correction process of detecting a position of the electrode sheet to correct the position of the electrode sheet between the unwinding process and the first slitting process.

In addition, the method may further include a second position correction process of detecting a position of each of the first unit electrode sheets to correct the position of the first unit electrode sheet between the first slitting process and the second slitting process.

### ADVANTAGEOUS EFFECTS

According to the present invention, since the first slitting part and the second slitting part are installed on the frame part to operate in one device, the processes may be integrated to remove the redundant device, thereby simplify the facility. Therefore, there may be the advantage of reducing the facility space and reducing the investment costs during the mass production.

In addition, the present invention may include the first position correction part and/or the second position correction part to prevent the position of the electrode transferred for the slitting from being distorted, thereby reducing the detect rate of the product and improving the reliability of the product.

### BRIEF DESCRIPTION OF THE DRAWINGS

FIG. 1 is a side view illustrating an apparatus for manufacturing a secondary battery according to Embodiment 1 of the present invention.
FIG. 2 is an enlarged side view illustrating a first slitting part, a second slitting part, a rewinding part, and a frame part in the apparatus for manufacturing the secondary battery, which is illustrated in FIG. 1.

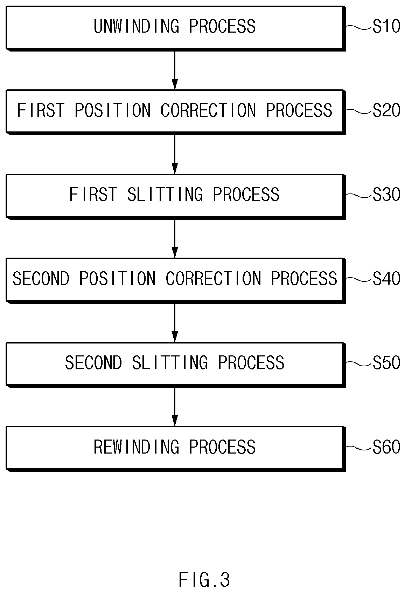

FIG. 3 is a flowchart illustrating processes in a method for manufacturing a secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Apparatus for manufacturing secondary battery

The present invention provides an apparatus 1 for manufacturing a secondary battery, which includes: at least one unwinding part 100 that unwinds an electrode sheet on which an electrode active material is applied and dried; at least one first slitting part 200 that receives the electrode sheet A0 from the unwinding part 100 to primarily cut the electrode sheet A0 so as to form a plurality of first unit electrode sheets A1; at least one second slitting part 300 that receives the first unit electrode sheets A1 from the first slitting part 200 to secondarily cut the first unit electrode sheets A1 so as to form a plurality of second unit electrode sheets A2; at least one rewinding part 400 that receives the second unit electrode sheets A2 from the second slitting part 300 and winds the received second unit electrode sheets A2; and a frame part 700 having a slitting space therein.

First, the unwinding part 100 may be configured to unwind the electrode sheet A0 on which the electrode active material is applied and dried and may have various configurations. Here, the electrode sheet A0 on which the electrode active material is applied and dried may be understood as a coated electrode sheet A0 after a coating process is completed in the art, and the electrode sheet A0 may be provided as a positive electrode sheet or a negative electrode sheet.

Specifically, the unwinding part 100 may include at least one unwinding roller 120 that unwinds the electrode sheet A0 and a main body 110 that rotatably supports the unwinding roller 120.

Here, the unwinding roller 120 may unwind the electrode sheet A0, which is wound in a roll shape and on which the electrode active material is applied and dried, through rotation to the electrode sheet A0 to the first slitting part 200 to be described later.

Here, the unwinder roller 120 may rotate at the same speed in synchronization with the rewinding roller 420 to be described later, and thus, the electrode sheet A0, the first unit electrode sheets A1, and the second unit electrode sheets A2 may be continuously transferred on the apparatus 1 for manufacturing the secondary battery.

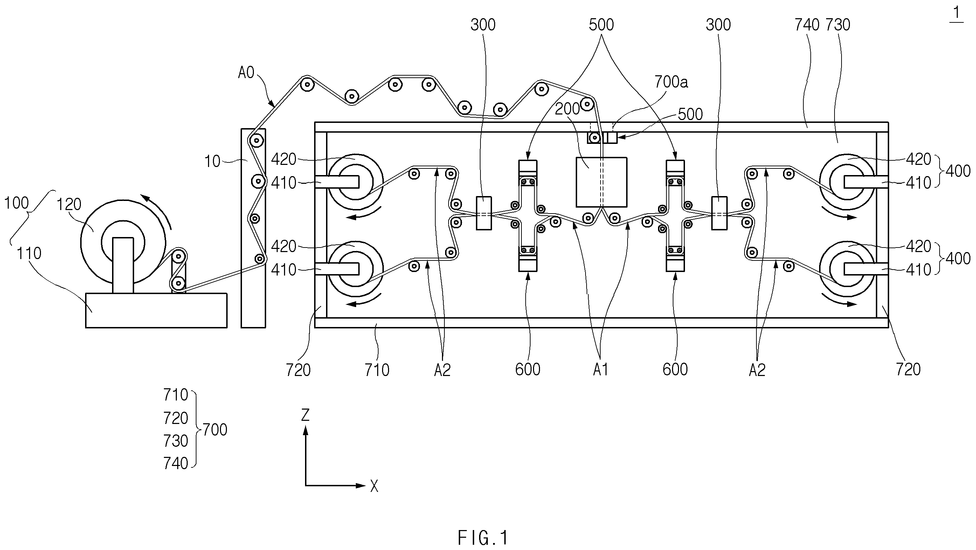

The electrode sheet A0 unwound from the above-described unwinding part 100 may be transferred to the first slitting part 200 and cut in the first slitting part 200. Here, as illustrated in FIG. 1, the electrode sheet A0 may be transferred to the first slitting part 200 by a plurality of rollers.

Here, when the first slitting part 200 may be provided inside the frame part 700 to be described later, and the above-described unwinding part 100 is provided outside the frame part 700, the electrode sheet A0 may be put into the frame part 700 from the outside. Here, some of the plurality of rollers may be rotatably supported by a roll support 10, and a height (height in a Z direction in FIG. 1) of the roll support 10 may be provided to correspond to a height (height in the Z direction in FIG. 1) of the frame part 700.

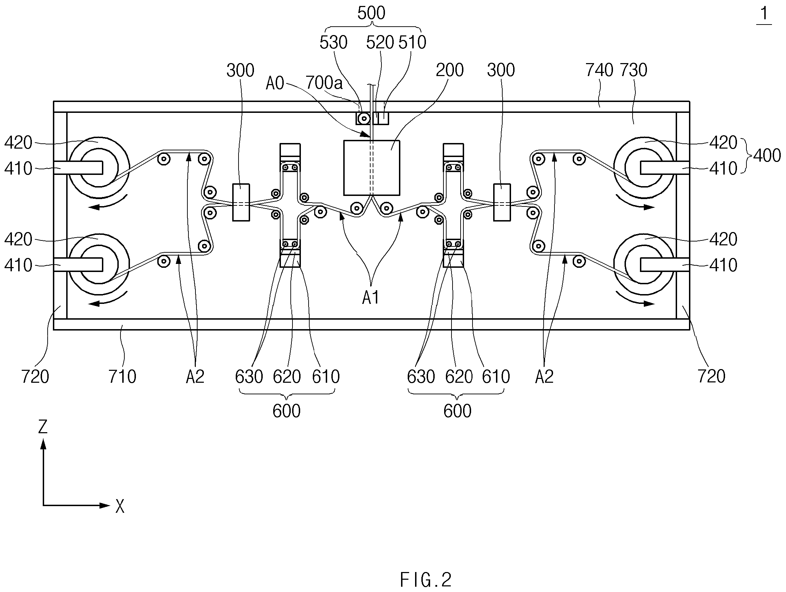

Specifically, as illustrated in FIG. 2, the first slitting part 200 may receive the electrode sheet A0 from the above-described unwinding part 100 and primarily cut the electrode sheet A0. Here, it is noted that the electrode sheet A0 passing through the inside of the first slitting part 200 is indicated by a dotted line.

The first slitting part 200 may include at least one cutter (not shown) for cutting the electrode sheet A0. Thus, the first slitting part 200 may cut the electrode sheet A0 through the cutter to form the plurality of first unit electrode sheet A1.

Here, the plurality of first unit electrode sheets A1 may move in different directions. For example, the first unit electrode sheets A1 may move from the first slitting part 200 toward a pair of pillar parts 720 to be described later. Here, each of the first unit electrode sheets A1 may be understood as an electrode having a width less than that of the electrode sheet A0.

As illustrated in FIG. 2, the above-described first slitting part 200 may be provided in the slitting space inside the frame part 700 to be described later. In more detail, the first slitting part 200 may be installed on a wall part 730 of the frame part 700.

The first unit electrode sheets A1 formed from the first slitting part 200 may be supplied to the second slitting part 300.

Specifically, the second slitting part 300 may receive the first unit electrode sheets A1 from the first slitting part 200 to secondarily cut the first unit electrode sheets A1. Here, it is noted that each of the first unit electrode sheets A1 passing through the inside of the second slitting part 300 is indicated by a dotted line.

The second slitting part 300 may include at least one cutter (not shown) for cutting the first unit electrode sheets A1. Thus, the second slitting part 300 may cut the first unit electrode sheet A1 to form a plurality of second unit electrode sheets A2. Here, each of the second unit electrode sheets A2 may be understood as an electrode sheet having a width less than that of each of the first unit electrode sheets A1.

The second slitting part 300 described above may be provided in the slitting space inside the frame part 700 to be described later. Here, the second slitting part 300 may be installed on the wall part 730 of the frame part 700.

The second unit electrode sheets A2 formed by the second slitting part 300 may be wound by the rewinding part 400.

Here, the rewinding part 400 may be configured to receive the second unit electrode sheets A2 from the second slitting part 300 so as to wind the received second unit electrode sheets A2 and may have various configurations.

The rewinding part 400 may include at least one rewinding roller 420 that winds the second unit electrode sheets A2 and a main body 410 that rotatably supports the rewinding roller 420.

Here, the rewinding roller 420 may be configured to wind the second unit electrode sheet A2 by rotation so that the second unit electrode sheet A2 is wound in a roll form and may rotate at the same speed in synchronization with the above-described unwinding roller 120.

The rewinding part 400 described above may be installed on the frame part 700 to be described later. In more detail, the rewinding part 400 may be provided in plurality and fixedly installed to face each other on the pair of pillar parts 720. Here, when the plurality of rewinding parts 400 are installed on one pillar part 720, the rewinding parts 400 may be installed side by side in a vertical direction (Z direction in FIG. 2) on one pillar part 720.

The first slitting part 200, the second slitting part 300, and the rewinding part 400, which are described above, may be provided inside the frame part 700. Here, the frame part 700 may be configured to define the slitting space provided therein and may have various configurations.

For example, the frame part 700 may include: a bottom part 710; a pair of pillar parts 720 extending upward from the bottom part 710; a wall part 730 coupled to a side surface of each of the pair of pillar parts 720; and a cover part 740 which is coupled to a top surfaces of each of the pair of pillar parts 720 and in which an input hole 700a, through which the electrode sheet is put into the slitting space, is defined.

Here, the bottom part 710 may be a portion of the frame part 700 provided to be in contact with the ground and may be understood as a configuration supporting the pair of pillar parts 720 to be described later.

In addition, each of the pillar parts 720 may be configured to extend upward from the bottom part 710 and may have various configurations. Specifically, the pillar parts 720 may be provided in a pair to extend from both ends of the bottom part 710 upward (Z direction in FIG. 2) in a longitudinal direction.

The wall part 730 may be coupled to the side surfaces of the pair of pillar parts 720. Here, the wall part 730 may have a plate shape and may be provided to be coupled to the side surface (surface disposed in a direction perpendicular to an X-Z plane in FIG. 2) of the above-described pillar part so that the frame part 700 defines the slitting space therein.

As illustrated in FIG. 2, the first slitting part 200 and the second slitting part 300, which are described above, may be fixedly installed on the wall part 730. In addition, the second position correction part 600 to be described later may also be fixed to the wall part 730.

In addition, the cover part 740 may be configured to define the input hole 700a through which the electrode sheet is put into the slitting space and may have various configurations.

Specifically, the cover part 740 may be provided to be coupled to a top surface (surface disposed in the Z direction in FIG. 2) of each of the pair of pillar parts 720 so that the slitting space is defined inside the frame part 700.

Here, the input hole 700a may be a through-hole passing through the inside and outside of the cover part 740 and may be defined at anywhere in the cover part 740. For example, the input hole 700a may be defined at a center of the cover part 740. Here, it is noted that the input hole 700a is indicated by a dotted line in FIGS. 1 and 2.

The above-described electrode sheet A0 may be distorted while moving for the primary slitting. Here, when the electrode sheet A0 is slit in the distorted state, a width of the first unit electrode sheet A1 to be formed may become non-uniform, which may cause defects in a finished product.

Thus, the present invention may further include at least one first position correction part 500 for correcting the distorted position of the electrode sheet A0 in the transfer process before being put into the first slitter 200.

Specifically, the first position correction part 500 may be provided on a movement path of the electrode sheet A0 to correct a position of the electrode sheet A0 by detecting the position of the electrode sheet A0.

The first position correction part 500 may be mounted on the frame part 700. More specifically, the first position correction part 500 may be mounted on the frame part 700 so as to be disposed close to the input hole 700a described above in the frame part 700. In this case, a first position detection part 520 and a first position adjustment part 530, which will be described later, may be provided to face each other with the input hole 700a therebetween.

The first position correction part 500 may include: a first position detection part 520 that detects the position of the electrode sheet A0; and a first position adjustment part 530 that adjusts the position of the electrode sheet A0 based on the position information of the electrode sheet A0, which is acquired from the first position detection part 520. In this case, the first position detection part 520 and the first position adjustment part 530 may be fixedly supported by the main body 510.

Specifically, the first position detection part 520 may be configured to detect the position of the electrode sheet A0 and may have various configurations. For example, the first position detection part 520 may include a line position control (LPC) sensor. In this case, the first position detection part 520 may acquire the position information of the electrode sheet A0 by detecting a position at which the electrode active material is applied on the electrode sheet A0, that is, an electrode active material application line.

The first position adjustment part 530 may be configured to adjust the position of the electrode sheet A0 based on the position information of the electrode sheet A0, which are acquired from the first position detection part 520 and may have various configurations.

For example, the first position adjustment part 530 may include a pivot roller. In addition, the pivot roller may move in a width direction of the electrode sheet A0 (direction perpendicular to the X-Z plane of FIG. 2). Here, the movement of the first position adjustment part 530 may be controlled by a controller (not shown).

Here, the controller (not shown) may receive a position value of the electrode sheet A0 from the first position detection part to compare information about the position value of the electrode sheet A0 set in advance with the position information of the electrode sheet A0, thereby controlling the position of the first position adjustment part 530.

The above-described first unit electrode sheet A1 may also be distorted while moving for the secondary slitting. Here, when the first unit electrode sheet A1 is slit in the distorted state, a width of the second unit electrode sheet A2 to be formed may become non-uniform, which may cause defects in the finished product.

Therefore, the present invention may further include at least one second position correction part 600 that corrects the position of the first unit electrode sheet A1 to prevent the position of the first unit electrode sheet A1 from being distorted before the secondary slitting by the second slitting part 300.

Specifically, the second position correction part 600 may be provided between the first slitting part 200 and the second slitting part 300 to detect the position of the first unit electrode sheet A1, thereby correcting the position of the first unit electrode sheet A1. The second position correction part 600 may be mounted on the wall part 730 of the frame part 700. Here, it is preferable that the second position correction part 600 is provided corresponding to the number of first unit electrode sheets A1 formed by being cut from the first slitting part 200.

The second position correction part 600 may include: a second position detection part 620 that detects the position of the first unit electrode sheet A1; and a second position adjustment part 630 that adjusts the position of the first unit electrode sheet A1 based on the position information of the first unit electrode sheet A1, which is acquired from the second position detection part 620. In this case, the second position detection part 620 and the second position adjustment part 630 may be fixedly supported by the main body 610.

Specifically, the second position detection part 620 may be configured to detect the position of the first unit electrode sheet A1 and may have various configurations. For example, the second position detection part 620 may include a line position control (LPC) sensor. In this case, the second position detection part 620 may acquire the position information of the first unit electrode sheet A1 by detecting a position at which the electrode active material is applied on the first unit electrode sheet A1, that is, an electrode active material application line.

In addition, the second position adjustment part 630 may be configured to adjust the position of the first unit electrode sheet A1 based on the position information of the first unit electrode sheet A1, which are acquired from the second position detection part 620 and may have various configurations.

For example, the second position adjustment part 630 may include a pivot roller. In addition, the pivot roller may move in the width direction of the first unit electrode sheet A1 (direction perpendicular to the X-Z plane of FIG. 2). Here, the movement of the second position adjustment part 630 may be controlled by the controller (not shown).

Here, the controller may receive a position value of the first unit electrode sheet A1 from the second position detection part 620 to compare the position value of the first unit electrode sheet A1 set in advance with the position value of the first unit electrode sheet A1, thereby controlling the position of the first position adjustment part 630.

### Method for manufacturing secondary battery

The present invention may include: an unwinding process (S10) of unwinding an electrode sheet A0 on which an electrode active material is applied and dried; a first slitting process (S30) of primarily cutting the electrode sheet A0 to form a plurality of first unit electrode sheets A1 after the unwinding process (S10); a second slitting process (S50) of secondarily cutting the first unit electrode sheets A1 to form a plurality of second unit electrode sheets A2 after the first slitting process (S30); and a rewinding process (S60) of winding the second unit electrode sheets A2 after the second slitting process (S50). Here, the unwinding process (S10), the first slitting process (S30), the second slitting process (S50), and the rewinding process (S60) may be continuously performed.

Here, the unwinding process (S10) may be a process of unwinding the electrode sheet A0, on which the electrode active material is applied and dried, and may be performed in various manners.

First, the unwinding process (S10) may be a process of unwinding the electrode sheet A0, on which the electrode active material is applied and dried, and may be performed in various manners. Here, the electrode sheet A0 on which the electrode active material is applied and dried may be preferably understood as a coated electrode sheet A0, on which a coating process is completed, in the art.

In addition, the unwinding process (S10) may be performed by unwinding the electrode sheet A0 by an unwinding part 100, and here, a detailed description of the unwinding part 100 will be replaced with the above-described contents.

After performing the unwinding process (S10), the first slitting process (S30) of primarily cutting the electrode sheet A0 may be performed.

Here, the first slitting process (S30) may be a process of primarily cutting the electrode sheet A0 to form the plurality of unit electrode sheet A1 and may be performed in various manners.

Specifically, in the first slitting process (S30), the electrode sheet A0 may be cut in a direction parallel to a transfer direction (Z direction in FIG. 2) of the electrode sheet A0 to form the plurality of first unit electrode sheets A1. Here, a width of each of the unit electrode sheets A1 may be variously set.

In the first slitting process (S30) described above, the electrode sheet A0 may be cut by the first slitting part 200 described above. Here, more specific contents about the first slitting part 200 may be replaced with the above contents.

In addition, after performing the first slitting process (S30), the second slitting process (S50) of secondarily cutting the first unit electrode sheet A1 may be performed.

The second slitting process (S50) may be a process of secondarily cutting the first unit electrode sheet A1 to form the plurality of unit electrode sheets A1 after the first slitting process (S30) and may be performed in various manners.

Here, the second slitting process (S50) may be a process of primarily cutting the first unit electrode sheets A1 to form the plurality of second unit electrode sheets A1 and may be performed in various manners.

Specifically, in the second slitting process (S50), the first unit electrode sheets A1 may be cut in a direction parallel to the transfer direction (Z direction in FIG. 2) of the first unit electrode sheets A1 to form the plurality of second unit electrode sheets A2. Here, the width of the second unit electrode sheet A2 may be variously set.

In the second slitting process (S50), the first unit electrode sheets A1 may be cut by the second slitting part 300 described above. Here, more specific contents about the second slitting part 300 may be replaced with the above contents.

In addition, after the second slitting process (S50) is performed, the rewinding process (S60) of winding the second unit electrode sheets A2 may be performed.

Here, the rewinding process (S60) may be a process of winding the second unit electrode sheets A2 after the second slitting process (S50) and may be performed in various manners. Specifically, the rewinding process (S60) may be performed by winding the second unit electrode sheets A2 by the rewinding part 400, and here, detailed descriptions of the rewinding part 400 will be replaced with the above descriptions.

The present invention may further include a first position correction process (S20) of correcting the position of the electrode sheet A0 between the unwinding process (S10) and the first slitting process (S30).

Specifically, the first position correction process (S20) may be a process of detecting the position information of the electrode sheet A0 through the first position correction part 500 to correct the position of the electrode sheet A0 based on the position information of the electrode sheet A0 and may be performed in various manners. Here, detailed descriptions of the first position correction part 500 may be replaced with the above descriptions.

In addition, the present invention includes a second position correction process (S40) of correcting the position of each of the first unit electrode sheets A1 between the first slitting process (S30) and the second slitting process (S50) .

Specifically, the first position correction process (S40) may be a process of detecting the position information of each of the first unit electrode sheets A1 through the second position correction part 600 to correct the position of the first unit electrode sheet A1 based on the position information of each of the first unit electrode sheets A1 and may be performed in various manners. Here, detailed descriptions of the second position correction part 600 may be replaced with the above descriptions.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Roll support
100: Unwinding part
110: Main body
120: Unwinding roller
200: First slitting part
300: Second slitting part
400: Rewinding part
410: Main body
420: Rewinding roller
500: First position correction part
510: Main body
520: First position detection part
530: Second position adjustment part
600: Second position correction part
610: Main body
620: Second position detection part
630: Second position adjustment part
700: Frame part
700a: Input hole
710: Bottom part
720: Pillar part
730: Wall part
740: Cover part
S10: Unwinding process
S20: First position correction process
S30: First slitting process
S40: Second position correction process
S50: Second slitting process
S60: Rewinding process
A0: Electrode sheet
A1: First unit electrode sheet
A2: Second unit electrode sheet

## Claims

1. An apparatus for manufacturing a secondary battery, the method comprising:
at least one unwinding part configured to unwind an electrode sheet on which an electrode active material is applied and dried;
at least one first slitting part configured to receive the electrode sheet from the unwinding part and primarily cut the electrode sheet so as to provide a plurality of first unit electrode sheets;
at least one second slitting part configured to receive the first unit electrode sheets from the first slitting part and secondarily cut the first unit electrode sheets so as to provide a plurality of second unit electrode sheets;
at least one rewinding part configured to receive the second unit electrode sheets from the second slitting part so as to wind the received second unit electrode sheets; and
a frame part having a slitting space therein,
wherein the first slitting part and the second slitting part are installed on the frame part.

2. The apparatus of claim 1, further comprising at least one first position correction part disposed on a movement path of the electrode sheet to detect a position of the electrode sheet so as to correct the position of the electrode sheet.

3. The apparatus of claim 1, wherein the first position correction part is mounted on the frame part.

4. The apparatus of claim 2, wherein the first position correction part comprises:
a first position detection part configured to detect the position of the electrode sheet; and
a first position adjustment part configured to adjust the position of the electrode sheet based on position information of the electrode sheet, which is acquired from the first position detection part.

5. The apparatus of claim 4, wherein the first position detection part comprises a line position control (LPC) sensor.

6. The apparatus of claim 4, wherein the first position adjustment part comprises a pivot roller.

7. The apparatus of any one of claims 1 to 2, further comprising at least one second position correction part provided between the first slitting part and the second slitting part to detect a position of each of the first unit electrode sheets so as to correct the position of each of the first unit electrode sheets.

8. The apparatus of claim 7, wherein the second position correction part is provided corresponding to a number of first unit electrode sheets formed by being cut from the first slitting part.

9. The apparatus of claim 7, wherein the second position correction part comprises:
a second position detection part configured to detect the position of the first electrode sheet; and
a second position adjustment part configured to adjust the position of the first unit electrode sheet based on position information of the first unit electrode sheet, which is acquired from the second position detection part.

10. The apparatus of claim 9, wherein the second position detection part comprises a line position control (LPC) sensor.

11. The apparatus of claim 9, wherein the second position adjustment part comprises a pivot roller.

12. The apparatus of claim 1, wherein the frame part comprises:
a bottom part;
a pair of pillar parts extending upward from the bottom part;
a wall part coupled to a side surface of each of the pair of pillar parts; and
a cover part coupled to a top surface of each of the pair of pillar parts and in which an input hole, through which the electrode sheet is inserted into the slitting space, is defined.

13. The apparatus of claim 12, wherein the plurality of first unit electrode sheets are branched from the first slitting part toward the pair of pillar parts to move; and
the rewinding part is provided in plurality, which are fixedly installed to face each other on the pair of pillar parts.

14. The apparatus of claim 12, wherein the first slitting part and the second slitting part are fixedly installed on the wall part.

15. A method for manufacturing a secondary battery, the method comprising:
an unwinding process of unwinding an electrode sheet on which an electrode active material is applied and dried;
a first slitting process of primarily cutting the electrode sheet to form a plurality of first unit electrode sheets after the unwinding process;
a second slitting process of secondarily cutting the first unit electrode sheets to form a plurality of second unit electrode sheets after the first slitting process; and
a rewinding process of winding the second unit electrode sheets after the second slitting process,
wherein the unwinding process, the first slitting process, the second slitting process, and the rewinding process are continuously performed.

16. The method of claim 15, further comprising a first position correction process of detecting a position of the electrode sheet to correct the position of the electrode sheet between the unwinding process and the first slitting process.

17. The method of any one of claims 15 to 16, further comprising a second position correction process of detecting a position of each of the first unit electrode sheets to correct the position of the first unit electrode sheet between the first slitting process and the second slitting process.
